# EUROPÄISCHE PATENTANMELDUNG

(11) **EP 1 416 626 A2**
(43) Veröffentlichungstag der Anmeldung: **06.05.2004**
(21) Anmeldenummer: 03018775.1
(22) Anmeldetag: 28.08.2003
(51) Int. Cl.: H02P 7/625

(54) **Drehstrommotor mit einem Schleifringläufer und damit ausgestattete Transportanlage**

(30) Priorität: 31.10.2002 DE 20216775 U; 23.12.2002 DE 10260751
(71) Anmelder: Alstom, 75116 Paris (FR)
(72) Erfinder: Möhlenkamp, Georg, Dr., 14979 Grossbeeren (DE); Jacobs, Helmuth, 51429 Bergisch Gladbach (DE); Eggert, Bernhard, Dr., 13591 Berlin (DE)
(74) Vertreter: Dreiss, Fuhlendorf, Steimle & Becker

(57) **Zusammenfassung**

Bekannt sind Drehstrommotoren mit Schleifringläufer aus den verschiedensten Einsatzgebieten. Sie werden zumeist über eine dreiphasige Versorgungsspannung gespeist, wobei die Drehzahlstellung häufig durch Widerstände erfolgt, die in den Läuferkreis geschaltet werden. Die Motoren werden in verschiedensten Arbeitsmaschinen eingesetzt. Ein anderes sehr geeignetes Einsatzgebiet für solche Motoren sind Transportanlagen, insbesondere Förderbandanlagen, wie sie etwa im Braunkohlebergbau zu finden sind.

Vorgeschlagen wird hier ein Drehstrommotor, dessen Stator (ST) mit einer ersten Versorgungsspannung (U1) gespeist wird, und dessen Schleifringläufer (LF) an eine zweite Versorgungsspannung (U2) angelegt wird, wobei ein Stromrichter (SR) in den Läuferkreis eingesetzt, der den Läuferstrom (I) veränderbar steuert. Das hat u.a. den Vorteil, dass gegenüber eines statorseitigen Einsatzes der hier im Läuferkreis eingesetzte Stromrichter nur für die halbe Leistung ausgelegt werden braucht, was wiederum den Aufwand und die Kosten für die vorgeschlagene Schaltung reduziert. Außerdem kann der Motor mittels Schalterstellungen (S1, S2) in verschiedenen Betriebsmodi betrieben werden, die zum einen einen Asynchronmaschinenbetrieb bei geringer Drehzahl, zum anderen einen Schleifringläuferbetrieb als untersynchrone Stromrichterkaskade ab halber Nenndrehzahl, und einen als übersynchrone Stromrichterkaskade ab Nenndrehzahl ermöglichen. Der Einsatz erfolgt vorzugsweise in Transportanlagen, insbesondere in Förderbandanlagen, etwa im Braunkohlenabbau oder dergleichen.

## Beschreibung

Die Erfindung betrifft einen Drehstrommotor mit einem Schleifringläufer gemäß dem Oberbegriff des Anspruchs 1 und eine damit ausgestattete Transportanlage, insbesondere eine Förderbandanlage, gemäß dem Oberbegriff des nebengeordneten Anspruchs. Die Erfindung betrifft ebenfalls ein Verfahren zum Betreiben eines Drehstrommotors nach dem Oberbegriff des Anspruchs 12.

Bekannt sind Drehstrommotoren mit Schleifringläufer aus den verschiedensten Einsatzgebieten. Sie werden zumeist über eine dreiphasige Versorgungsspannung gespeist, und in diesen Fällen auch als Schleifringläufer-Drehstrommotoren bezeichnet, wobei die Drehzahlstellung häufig durch Widerstände erfolgt, die in den Läuferkreis geschaltet werden. Die Motoren werden in verschiedensten Arbeitsmaschinen eingesetzt. Ein anderes sehr geeignetes Einsatzgebiet für solche Motoren sind Transportanlagen, insbesondere Förderbandanlagen, wie sie etwa im Braunkohlenbergbau zu finden sind.

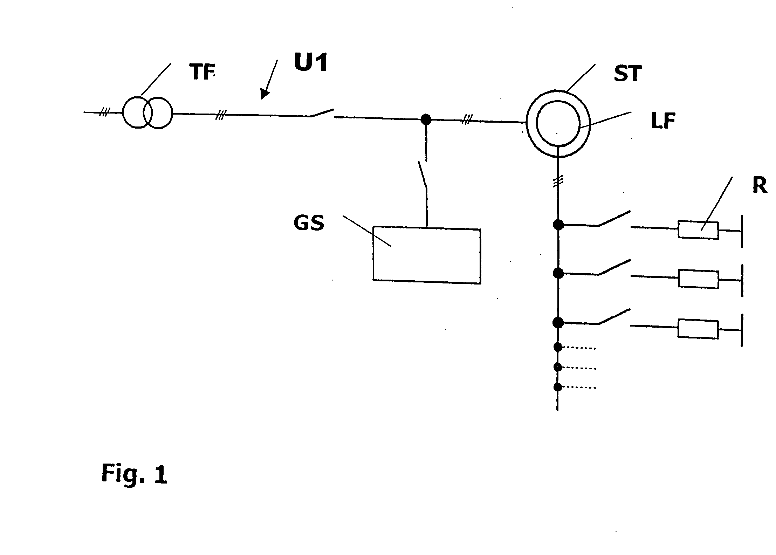

Die Figur 1 zeigt die Prinzipschaltung für einen herkömmlichen Drehstrommotor mit Schleifringläufer. Der Stator ST wird von einer Versorgungsspannung gespeist, die ein Transformator TF von einer Hochspannung herunter spannt. In den Stromkreis des Schleifringläufers LF können feste oder variable Widerstände R eingeschaltet werden, mittels denen die Drehzahlstellung erfolgt. Dadurch wird eine Absenkung der Bemessungsdrehzahl ermöglicht, das Kippmoment des Motors aber bleibt konstant. Das Anzugsmoment jedoch hängt vom eingestellten ohmschen Widerstand im Läuferkreis ab. Zusätzlich kann eine Gleichstrombremse GS angebracht werden, die durch Anlegen von Gleichspannung in die Ständerwicklungen ST einen Bremsgleichstrom erzeugt, der den Motor elektrisch abbremst.

Aufgabe der Erfindung ist es einen Drehstrommotor mit Schleifringläufer der eingangs genannten Art zu verbessern, so dass ein drehzahlvariabler Betrieb des Motors von Null bis oberhalb der Nenndrehzahl zum Einsatz in Transportanlagen, insbesondere in Förderbandanlagen gegeben ist, unter Vermeidung der Verlustleistung in den Motorwiderständen.

Gelöst wird die Aufgabe durch einen Drehstrommotor mit den Merkmalen nach Anspruch 1. Außerdem wird eine mit einem solchen Motor ausgestattete Transportanlage gemäß den Merkmalen des nebengeordneten Anspruchs vorgeschlagen. Die Erfindung wird ebenfalls durch ein Verfahren nach dem Anspruch 12 gelöst.

Zur Verbesserung des Drehstrommotors, dessen Stator mit einer ersten Versorgungsspannung gespeist wird, wird nun an dem Schleifringläufer eine zweite Versorgungsspannung angelegt und es wird ein Stromrichter in den Läuferkreis eingesetzt, der den Läuferstrom veränderbar steuert.

Das hat u.a. den Vorteil, dass gegenüber eines statorseitigen Einsatzes der hier im Läuferkreis eingesetzte Stromrichter nur für die halbe Leistung ausgelegt werden braucht, was wiederum den Aufwand und die Kosten für die vorgeschlagene Schaltung reduziert.

Weiterhin ergibt sich der Vorteil, dass über die Nenndrehzahl hinaus bis zur eineinhalbfachen (1,5 fachen) der Nenndrehzahl der Motor mit konstantem Moment betrieben werden kann, also eine weitere Leistungserhöhung um den Faktor 1,5 möglich ist, ohne die Auslegung von Motor und Stromrichter zu erhöhen.

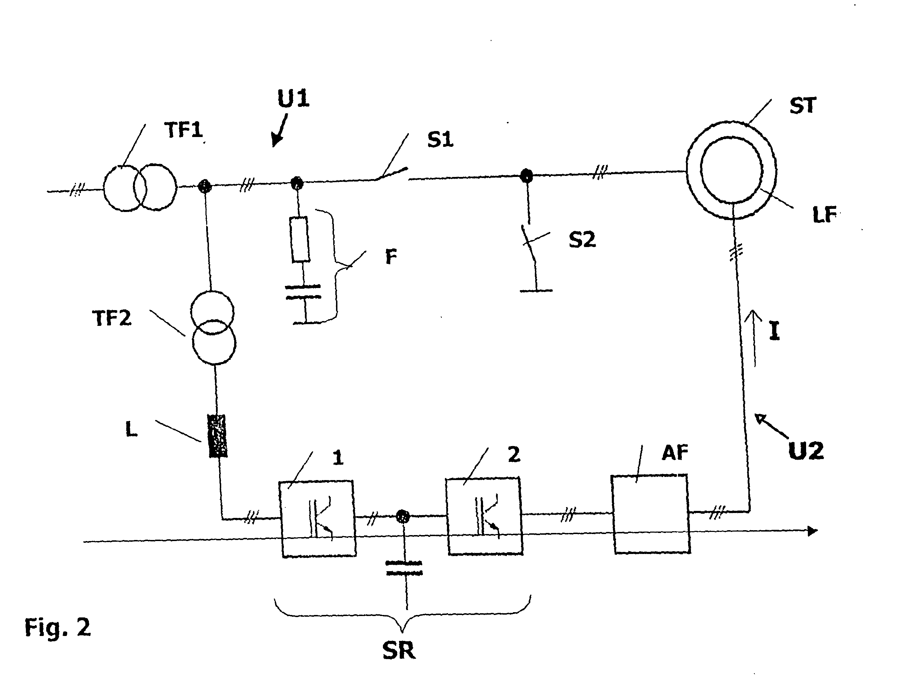

Außerdem ergibt sich der Vorteil, dass die Stromrichterausgangsspannung (U2 in Fig. 2) nur für die halbe Läuferstillstandsspannung ausgelegt werden muss. Zudem hat die Erfindung auch den Vorteil, dass die maximal notwendige Stromrichterausgangsspannung höher sein kann als die speisende Spannung der Stromrichteranordnung, da der netzseitige Stromrichter als Hochsetzsteller arbeitet.

Besonders vorteilhafte Ausgestaltungen der Erfindung ergeben sich aus den Unteransprüchen:

So ist es besonders vorteilhaft, wenn zwischen der ersten Versorgungsspannung und den Ständerwicklungen ein Unterbrecherschalter eingesetzt ist, und dass ein Kurzschlussschalter mit den Ständerwicklungen verbunden ist. Denn mittels dieser Beschaltung können je nach Schalterstellung drei verschiedene Betriebsmodi eingestellt werden. Zu einen kann der Motor mit kurzgeschlossenen Ständerwicklungen bei niedrigen Drehzahlen als Asynchronmotor betrieben werden. Zum zweiten ist der Betrieb ab halber Nenndrehzahl als untersynchrone Stromrichterkaskade möglich, wobei die mechanisch nicht benötigte Leistung vom Stator über den Rotor und Stromrichter zurück in das Versorgungsnetz fließt. Zum dritten kann der Motor ab Nenndrehzahl oberhalb davon als übersynchrone Stromrichterkaskade betrieben werden, wobei sich die Statorleistung mit der Rotorleistung sich zur mechanischen Leistung addieren.
Es ist im Zusammenhang mit der vorgesehenen Stromrichterschaltung vorteilhaft, wenn in den Ständerkreis ein Filter eingesetzt ist, das gegen auftretende Netzrückwirkungen wirkt, die sowohl vom Stromrichter direkt ins Netz als auch vom Stromrichter über den Motor ins Netz hinein wirken können.

Außerdem ist es besonders vorteilhaft, wenn in den Läuferkreis ein Ausgangsfilter am Ausgang des Stromrichters eingesetzt ist.

Darüber hinaus ergibt sich ein besonderer Vorteil, wenn eine Spule in den Läuferkreis am Eingang des Stromrichters eingesetzt ist, die die Differenzspannungszeitflächen aufnimmt.

Eine weitere vorteilhafte Ausgestaltung besteht darin, dass der Stromrichter mindestens zwei kaskadierte Stufen umfasst.

Schließlich ist es von Vorteil, wenn ein Transformator dem Stromrichter vorgeschaltet ist, und wenn der Transformator aus der ersten Versorgungsspannung die zweite Versorgungsspannung erzeugt. In einer besonders vorteilhaften Ausführungsform kann die Funktion der Spule im Läuferkreis auch in diesen Transformator integriert werden.

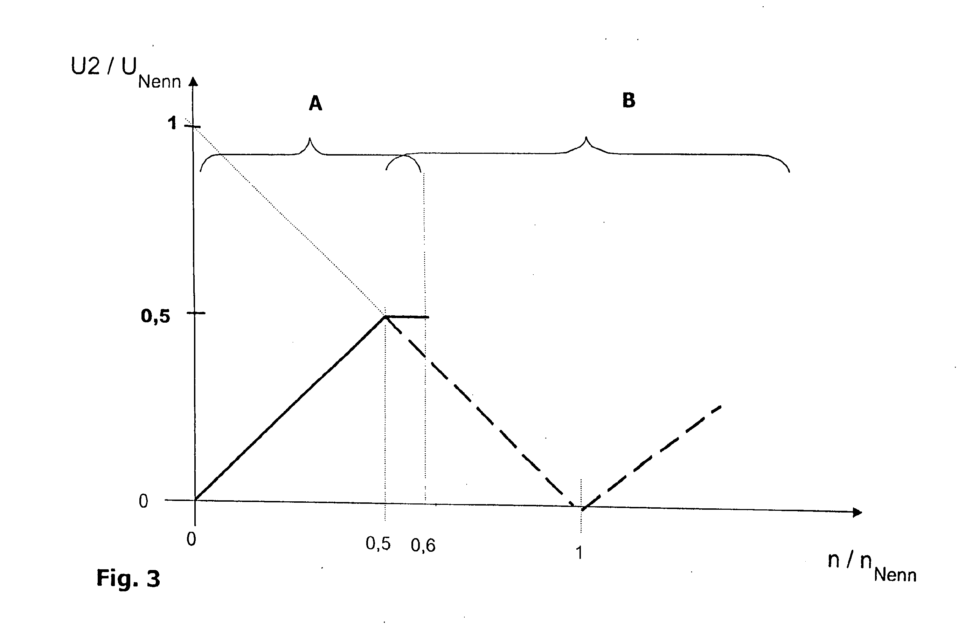

Nachfolgend werden nun die Erfindung und die sich daraus ergebenden Vorteile anhand eines Ausführungsbeispiels und unter Bezugnahme auf die Figuren 2 und 3 näher beschrieben.

Die Figur 2 zeigt eine Prinzipschaltung für einen erfindungsgemäßen Motor, und die Figur 3 zeigt das Betriebsverhalten des Motors in verschiedenen Drehzahlbereichen.

In der Figur 2 ist ein Wechselstrommotor für drei Phasen, also ein Drehstrommotor, dargestellt, der die folgenden erfindungsgemäßen Merkmale aufweist:

Die Ständerwicklungen ST des Stators (Ständers) werden von einer ersten Versorgungsspannung U1 gespeist, die mittels eines ersten Transformators TF1 aus einer Hochspannung gewonnen wird. In den Ständerkreis ist ein Unterbrechungsschalter S1 eingefügt, der die Ständerwicklungen ST von der Versorgungsspannung U1 trennen kann. Außerdem ist diesem Schalter S1 ein Filter F vorgeschaltet, das auftretenden Netzrückwirkungen entgegenwirkt.

Der Schleifringläufer LF wird von einer zweiten Versorgungsspannung U2 versorgt, wobei in den Läuferkreis ein Stromrichter SR in Form einer Stromrichteranordnung mit zwei Stufen SR1 und SR2 eingesetzt ist, der den Läuferstrom I und somit auch das Betriebsverhalten des Motors steuert. Die Versorgung der Stromrichteranordnung wird mittels eines zweiten Transformators TF2 aus der ersten Versorgungsspannung U1 erzeugt. Der Stromrichteranordnung SR ist eine Spule L mit einem ausreichenden Uk vorgeschaltet. Der Stromrichter SR selbst umfasst zwei kaskadierte Stufen 1 und 2 sowie ein Kondensator. Am Ausgang der ersten Stromrichterstufe SR1, die als Hochsetzsteller für seine Ausgangsgleichspannung ausgebildet ist, befinden sich ein Kondensator und die zweite Stromrichterstufe SR2. Diese speist über ein Ausgangsfilter AF, das in Form eines Glättungsgliedes auf die zeitliche Änderung der Spannung wirkt, in den Läuferkreis (Schleifringläufer LF) mit variabler Spannung und Frequenz. Dabei kann die maximale Ausgangspannung U2 gegenüber der speisenden Spannung des Stromrichters SR1 erhöht sein.

Im folgenden werden noch genaue Angaben zu der in der Figur 2 dargestellten Schaltung gemacht:

Der Stromrichter SR arbeitet an der Ausgangsspannung des Transformators TF2 als Hochsetzsteller, d.h. dass die Zwischenkreisspannung erhöht ist gegenüber der gleichgerichteten Netzspannung. Damit kann der motorseitige Stromrichter eine erhöhte Ausgangsspannung U2 gegenüber der Eingangsspannung liefern.

Der Schleifringläufer-Motor selbst ist für seine Ständerspannung U1 ausgelegt. Der Läufer ist für seine maximal auftretende Stillstandsspannung ausgelegt.

Wird beispielsweise bei einem Momentenstoß das 1,3- fache Nennmoment gefordert, d.h. IRstoß = 1,3 x IRN »= 1100A, so bedeutet dies für den Schleifringläuferbetrieb den maximalen vom Stromrichter zu liefernden Strom. Im Asynchronbetrieb ergibt sich bei einem cosjN = 087 und einem hN = 0,968 ein IRstoß / (cosjN · hN ) » IRstoß x 1,19. Für die Auslegung des Stromrichters SR bedeutet dies einen Dauerstrom von mindestens IDauer = 1,19 x IRstoß .

Anhand der Figur 3 wird nun die Betriebsweise des Motors genau beschrieben, wobei auf die verschiedenen mittels der Schalterstellung (siehe Schalter S1 und S2 in der Figur 2) eingestellten Betriebsarten eingegangen wird:

Die Figur 3 zeigt den Drehzahlbereich von Null Umdrehungen pro Minute bis über die Nenndrehzahl nNenn hinausgehend. Darüber ist die am Läufer anliegende Spannung U2 aufgetragen, die zwischen 0 Volt und der maximalen vom Stromrichter gelieferten Spannung von 730 Volt liegen kann.

Anhand des Graphen wird deutlich, dass die vorgeschlagene Schaltung drei Anwendungen in einem Stromrichter vereinigt:

Bei niedriger Drehzahl (0-500 U/min. ist der Unterbrechungsschalter (S1 in der Figur 2) geöffnet. Der Kurzschlussschalter (S2 in der Figur 2) ist geschlossen, so dass die Ständerwicklungen kurzgeschlossen sind. Der Motor befindet sich somit im Asynchronmaschinenbetrieb (Betriebsbereich A). Die Läuferspannung U2 steigt ausgehend von 0 Volt bei Stillstand proportional mit der Drehzahl bis zu einem Maximalwert von 730 Volt bei halber Nenndrehzahl.

Ab der halben Drehzahl bleiben die Schalterstellungen zunächst unverändert und der Antrieb wird bis zum Bereich von etwa 0,6 x nNenn im Asynchronmaschinenbetrieb im Feldschwächebereich gefahren. Jetzt wird eine kurze Umschaltpause eingelegt, in der der Antrieb durch Schwungmassen und Trägheitsmomenten der gesamten Anordnung weitergedreht wird. Dabei ist Vorraussetzung, dass während der Umschaltpause die Drehzahl des Antriebs nicht unter halbe Nenndrehzahl abfällt. In dem hier beschriebenen Anwendungsfall, nämlich im Braunkohletagebau, in dem immer mehrere Antriebe ein Förderband treiben, werden vorteilhafterweise die Umschaltpausen der Antriebe nicht gleichzeitig, sonder nacheinander durchgeführt. Dadurch kann ein Abfallen der Drehzahl vermieden werden.

In der Umschaltpause (Umschaltphase) werden durch geeignete Steuerung des zweiten Stromrichters SR2 der Motorstrom zu Null gebracht und der Schalter S2 geöffnet. Dann wird der Motor über den Rotor und den Stromrichter SR2 aufmagnetisiert und es stellt sich eine Ständerspannung ein. Durch geeignete Steuerung des Stromrichters SR2 wird diese Ständerspannung mit der Versorgungsspannung U1 synchronisiert, so dass der Schalter S1 stromlos geschlossen wird.

Anschließend wird die Schaltung im Schleifringläuferbetrieb als untersynchrone Stromrichterkaskade betrieben. Dabei erfolgt ein Leistungsrückfluss der mechanisch nicht benötigten Leistung vom Stator über den Rotor und Stromrichter zurück in das Versorgungsnetz.

Die Läuferspannung U2 nimmt proportional mit der Drehzahl ab, wobei sie ausgehend vom Maximalwert 730 Volt bei halber Nenndrehzahl (500 U/min) den Minimalwert von 0 Volt bei Nenndrehzahl (1000 U/min) erreicht.

Ab der Nenndrehzahl (> 1000 U/min) steigt die Läuferspannung U2 wieder proportional zur Drehzahl an. Die Schaltung wirkt nun als übersynchrone Stromrichterkaskade, bei der sich Statorleistung und Rotorleistung zur mechanischen Leistung addieren.

Wie oben beschrieben wurde, stellt der vorgeschlagene Drehstrommotor einen sehr drehzahlvariablen und betriebsflexiblen Antrieb dar, der besonders gut geeignet ist für Transportanlagen, die Material befördern, so wie etwa Förderbandanlagen im Braunkohleabbau oder dergleichen, wo die kurze Umschaltpause nicht stört oder durch andere Antriebe ausgeglichen werden kann.

## Patentansprüche

1. Drehstrommotor mit einem Schleifringläufer (LF) und mit einem Stator mit Ständerwicklungen (ST), die eine erste Versorgungsspannung (U1) speist, **dadurch gekennzeichnet, dass** an dem Schleifringläufer (LF) eine zweite Versorgungsspannung (U2) anliegt und dass ein Stromrichter (SR) in den Läuferkreis eingesetzt ist, der den Läuferstrom (I) veränderbar steuert, so dass ein drehzahlvariabler Betrieb von Null an bis zur eineinhalbfachen Nenndrehzahl des Motors bei einstellbarem Moment verlustleistungsarm möglich ist.

2. Drehstrommotor nach Anspruch 1, **dadurch gekennzeichnet, dass** zwischen der ersten Versorgungsspannung (U1) und den Ständerwicklungen (ST) ein Unterbrecherschalter (S1) eingesetzt ist, und dass ein Kurzschlussschalter (S2) mit den Ständerwicklungen (ST) verbunden ist.

3. Drehstrommotor nach Anspruch 2, **dadurch gekennzeichnet, dass** der Motor als Asynchronmaschine betrieben wird, wenn der Kurzschlussschalter (S2) geschlossen ist, und dass der Motor als Schleifringläufermotor betrieben wird, wenn der Unterbrecherschalter (S1) geschlossen ist.

4. Drehstrommotor nach Anspruch 3, **dadurch gekennzeichnet, dass** während einer kurzen Umschaltpause zwischen Asynchronmaschinenbetrieb und Schleifringläuferbetrieb umgeschaltet wird.

5. Drehstrommotor nach Anspruch 1, **dadurch gekennzeichnet, dass** in den Ständerkreis ein Filter (F) eingesetzt ist, das gegen auftretende Netzrückwirkungen des Stromrichters (SR) wirkt.

6. Drehstrommotor nach Anspruch 1, **dadurch gekennzeichnet, dass** in den Läuferkreis ein Ausgangsfilter (AF) am Ausgang des Stromrichters (SR) eingesetzt ist.

7. Drehstrommotor nach Anspruch 1, **dadurch gekennzeichnet, dass** eine Spule (L) in den Läuferkreis am Eingang des Stromrichters (SR) eingesetzt ist.

8. Drehstrommotor nach Anspruch 1, **dadurch gekennzeichnet, dass** der Stromrichter (SR) mindestens zwei kaskadierte Stufen (1, 2) umfasst.

9. Drehstrommotor nach Anspruch 1, **dadurch gekennzeichnet, dass** ein Transformator (TF2) dem Stromrichter (SR) vorgeschaltet ist, und dass der Transformator (TF2) aus der ersten Versorgungsspannung (U1) die Versorgungsspannung des Stromrichters (SR) erzeugt.

10. Transportanlage, insbesondere Förderbandanlage, mit einem Drehstrommotor, der einen Schleifringläufer (LF) hat, und der einen Stator mit Ständerwicklungen (ST) hat, die eine erste Versorgungsspannung (U1) speist, **dadurch gekennzeichnet, dass** an dem Schleifringläufer (LF) eine zweite Versorgungsspannung (U2) anliegt und dass ein Stromrichter (SR) in den Läuferkreis eingesetzt ist, der den Läuferstrom (I) veränderbar steuert, so dass ein drehzahlvariabler Betrieb von Null an bis zur eineinhalbfachen Nenndrehzahl des Motors innerhalb der Auslegungsgrenzen beliebiger Last der Anlage verlustleistungsarm möglich ist.

11. Transportanlage nach Anspruch 10 mit mehreren Drehstrommotoren nach Anspruch 4, **dadurch gekennzeichnet, dass** die mehreren Drehstrommotoren nicht gleichzeitig sondern nacheinander zwischen Asynchronmaschinenbetrieb und Schleifringläuferbetrieb umgeschaltet werden.

12. Verfahren zum Betreiben eines Drehstrommotors, der einen Schleifringläufer(LF) und einen Stator mit Ständerwicklungen (ST) aufweist, wobei die Ständerwicklungen (ST) von einer ersten Versorgungsspannung (U1) gespeist werden, **dadurch gekennzeichnet, dass** eine zweite Versorgungsspannung (U2) an dem Schleifringläufer (LF) angelegt wird, und dass der Läuferstrom (I) mittels eines in den Läuferkreis eingesetzten Stromrichters (SR) veränderbar gesteuert wird.

13. Verfahren nach Anspruch 12, **dadurch gekennzeichnet, dass** der Motor als Asynchronmaschine betrieben wird, wenn ein mit den Ständerwicklungen (ST) verbundener Kurzschlussschalter (S2) geschlossen ist.

14. Verfahren nach Anspruch 13, **dadurch gekennzeichnet, dass** der Motor bei niedriger Drehzahl als Asynchronmaschine betrieben wird.

15. Verfahren nach Anspruch 12, **dadurch gekennzeichnet, dass** der Motor als Schleifringläufermotor betrieben wird, wenn ein zwischen der ersten Versorgungsspannung (U1) und den Ständerwicklungen (ST) eingesetzter Unterbrecherschalter (S1) geschlossen ist.

16. Verfahren nach Anspruch 13 oder 14 und nach Anspruch 15, **dadurch gekennzeichnet, dass** während einer Umschaltphase zwischen dem Asynchronmaschinenbetrieb und dem Schleifringläuferbetrieb umgeschaltet wird.

17. Verfahren nach Anspruch 16, **dadurch gekennzeichnet, dass** das Umschalten etwa zwischen dem 0,5-fachen und 0,6-fachen der Nenndrehzahl des Motors durchgeführt wird.

18. Verfahren nach Anspruch 16 oder 17, **dadurch gekennzeichnet, dass** bei mehreren Drehstrommotoren, die z. B. innerhalb einer Transportanlagemiteinander gekoppelt sind, die einzelnen Motoren nacheinander umgeschaltet werden.
